**Europäisches Patentamt**

**European Patent Office**

**Office européen des brevets**

(11) Veröffentlichungsnummer: **0 364 651**

**A1**

# EUROPÄISCHE PATENTANMELDUNG

(21) Anmeldenummer: **89102163.6**

(22) Anmeldetag: **08.02.89**

(51) Int. Cl.⁵: **F02M 31/16 , F23K 5/00**

(30) Priorität: **18.10.88 DE 8813097 U**

(43) Veröffentlichungstag der Anmeldung:
**25.04.90 Patentblatt 90/17**

(84) Benannte Vertragsstaaten:
**AT BE CH DE ES FR GB IT LI NL SE**

(71) Anmelder: **Frecke, Michael**
**Rosenheimer Landstrasse 20**
**D-8012 Ottobrunn(DE)**

(72) Erfinder: **Frecke, Michael**
**Rosenheimer Landstrasse 20**
**D-8012 Ottobrunn(DE)**

(74) Vertreter: **Kern, Wolfgang Dipl.-Ing. et al**
**Patentanwälte Kern, Brehm & Partner**
**Albert-Rosshaupter-Strasse 73**
**D-8000 München 70(DE)**

(54) **Vorrichtung zur Schadstoffminderung in Abgasen von Diesel-motorfahrzeugen und Heizölbrenneranlagen von Gebäudeheizungen.**

(57) Zur Verbesserung der Verbrennung von Dieselkraftstoff und Heizöl und damit zur Verringerung des Schadstoffanteils in den Abgasen wird vorgeschlagen, in den Kühlwasserkreislauf des Dieselmotors zwischen Motor und Kühler einen Wärmetauscher (1) einzuschalten, in dem sich eine Rohrschlange (3) befindet, deren Eingangsstutzen (4) zum Wärmetauscher (1) an den Kraftstofftank und deren Ausgangsstutzen (5) aus dem Wärmetauscher (1) an die Kraftstoffzuflußleitung des Motors anschließbar sind und die aus dem legierten Stahl des Typs Ermeto besteht und in dem Gehäuse (2) des Wärmetauschers (1) spiralförmig verlaufend und sich über den gesamten Gehäusequerschnitt erstreckend angeordnet ist.

**EP 0 364 651 A1**

Fig. 1

## Vorrichtung zur Schadstoffminderung in Abgasen von Dieselmotorfahrzeugen und Heizölbrenneranlagen von Gebäudeheizungen

Die Erfindung betrifft eine Vorrichtung zur Schadstoffminderung in den Abgasen von Dieselmotorfahrzeugen sowie Heizölbrenneranlagen von Gebäudeheizungen.

Die Umweltverschmutzung durch die Abgase von Dieselmotorfahrzeugen stellt trotz der im Vergleich zu den Abgasen des Ottomotors geringeren Oxydbelastung dieser Abgase im Hinblick auf den hohen Gehalt an Rußteilchen eine ernsthafte Beeinträchtigung der Lebensbedingungen dar, deren Beseitigung vordringlich ist.

Ebenso ist die in den Millionen von Einzelfeuerungsanlagen durch Heizöl bewirkte Umweltverschmutzung aufgrund der in die Atmosphäre entweichenden ungereinigten Abgase ein Umweltproblem, an dessen Lösung ernsthaft gearbeitet wird.

Die Erfindung hat sich zur Aufgabe gemacht, die Voraussetzungen für die Verbrennung von Dieselkraftstoff und Heizöl weiter zu verbessern, um dadurch den Schadstoffanteil in den Abgasen erheblich zu senken, und zwar insbesondere was die Verbrennung der Dieselkraftstoffe anbelangt unter die bereits auf europäischer Ebene festgesetzten Grenzwerte. Sie geht dabei von der Erkenntnis aus, daß eine Erwärmung der zu verbrennenden Dieselkraftstoffe und Heizöle vor der Verbrennung eine wesentliche Verbesserung der Abgaszusammensetzung im Sinne eines geringeren Schadstoffausstoßes mit sich bringt, wobei jedoch die bisher verwendete elektrische Beheizung der Dieselkraftstoffe und Heizöle vor der Verbrennung nicht nur apparatetechnisch als zu aufwendig angesehen wird, sondern in einigen europäischen Ländern aus Sicherheitsgründen sogar verboten ist.

Die Erfindung löst das Aufwärmungsproblem auf neuartige Weise mit Hilfe einer Vorrichtung, die sich bei der Verbrennung von Dieselkraftstoffen in Motorfahrzeugen kennzeichnet durch einen Wärmetauscher, der in den Kühlwasserkreislauf des Dieselmotors zwischen Motor und Kühler eingeschaltet ist und in dem sich eine Rohrschlange befindet, deren Ausgangsstutzen zum Wärmetauscher an den Kraftstofftank und deren Ausgangsstutzen aus dem Wärmetauscher an die Kraftstoffzuflußleitung des Motors anschließbar sind, und der aus dem legierten Stahl des Typs Ermeto besteht und in dem Gehäuse des Wärmetauschers spiralförmig verlaufend und sich über den gesamten Gehäusequerschnitt erstreckend angeordnet ist.

Für den Fall der Verwendung der neuerungsgemäßen Vorrichtung für Heizölbrenneranlagen von Gebäudeheizungen kennzeichnet sie sich ebenfalls durch einen Wärmetauscher, der aber in den Heizwasservorlauf oder in die Warmwasserentnahmeleitung einschaltbar ist und in dem sich eine Rohrschlange befindet, deren Eingangsstutzen zum Wärmetauscher an die Heizölabgabeleitung des Heizöltanks und deren Ausgangsstutzen aus dem Wärmetauscher an die Heizölzuflußleitung zum Brenner anschließbar sind und der in diesem Fall aus dem legierten Stahl des Typs Ermeto besteht und in dem Gehäuse des Wärmetauschers spiralförmig verlaufend und sich über den gesamten Gehäusequerschnitt erstreckend angeordnet ist.

Durch diese Konstruktion wird eine wirtschaftliche und effiziente Erwärmung des zu verbrennenden Dieselkraftstoffs bzw. Heizöls erreicht, weil keine elektrische Energie und entsprechende Heizelemente mehr benötigt werden, sondern der Wärmeinhalt des im Motor zur Verfügung stehenden erwärmten Kühlwassers bzw. in der Heizungsanlage zur Verfügung stehenden Heizungswassers oder erwärmten Brauchwassers ausgenutzt werden kann, um den Dieselkraftstoff bzw. das Heizöl auf eine Temperatur zu erwärmen, die eine bessere, d.h. schadstoffärmere Verbrennung gewährleistet.

Die Erfindung wird anhand des in der Zeichnung dargestellten Ausführungsbeispiels näher erläutert. In der Zeichnung zeigen:

Fig. 1 eine schematische Seitenansicht des neuerungsgemäßen Wärmetauschers, und

Fig. 2 eine Stirnansicht des Wärmetauschers.

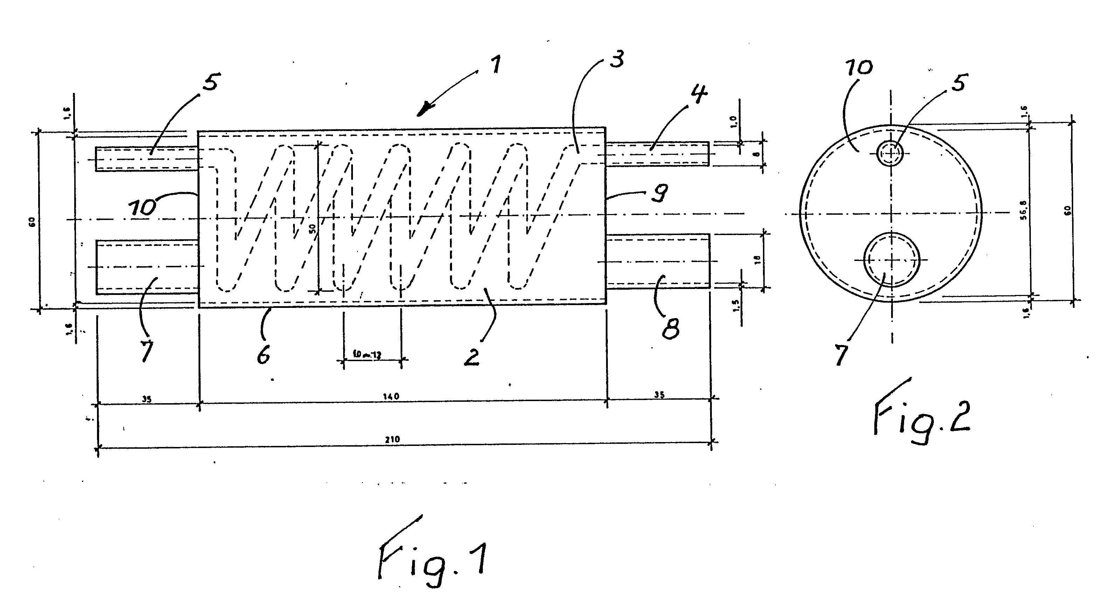

Der in Fig. 1 dargestellte Wärmetauscher 1 weist ein zylindrisches, aus Stahlblech bestehendes Gehäuse 2 auf, dessen Oberfläche 6 geeigneterweise wärmeisoliert ist. In diesem Gehäuse befindet sich eine aus dem legierten Stahl des Typs Ermeto bestehende Rohrschlange 3, die den Wärmetauscher spiralförmig von seiner einen Stirnseite 9 zur anderen Stirnseite 10 durchläuft und sich dabei im wesentlichen über den vollen Gehäusequerschnitt erstreckt. Die Rohrschlange 3 hat einen Eingangsstutzen 4 auf der Stirnseite 9 des Gehäuses und einen Ausgangsstutzen 5 auf der gegenüberliegenden Stirnseite 10. Für den Fall, daß der Wärmetauscher in den Kühlwasserkreislauf eines Dieselmotors zwischen Motor und Kühler eingebaut wird, wird durch die Rohrschlange Dieselkraftstoff geleitet, und der Eingangsstutzen 4 liegt auf der dem Kraftstofftank zugewandten Seite, während der Ausgangsstutzen 5 an die Kraftstoffzuflußleitung des Motors angeschlossen ist. Für den Fall, daß der Wärmetauscher für eine Heizölbrenneranlage eines Gebäudes verwendet wird, wird durch die Rohrschlange 3 Heizöl geleitet, wobei dann der Eingangsstutzen 4 an die Heizölabgabeleitung des Heizöltanks angeschlossen ist, während der Ausgangsstutzen 5 mit der Heizölzuflußleitung zum Brenner in Verbindung steht.

In den Stirnseiten 9 und 10 des zylindrischen Gehäuses 2 befinden sich außerdem Kühl- bzw. Heizwassereingangs-und Ausgangsstutzen 7 und 8, deren Mittelpunkte bei dem dargestellten Ausführungsbeispiel auf demjenigen Radius des zylindrischen Gehäusequerschnitts angeordnet sind, auf dem auch die Mittelpunkte der kreisrunden Eingangs-bzw. Ausgangsstutzen 4, 5 liegen. Durch die Stutzen 7 und 8, die einen größeren Querschnitt haben als die Stutzen 4 und 5, wird im Falle der Verwendung des Wärmetauschers für Dieselmotorfahrzeuge das erhitzte Kühlwasser des Motors in das Gehäuse 2 eingeleitet, bzw. nach erfolgtem Wärmeaustausch mit dem durch die Rohrschlange 3 strömenden Dieselkraftstoff aus dem Gehäuse wieder ausgeleitet, um in den vorhandenen Kühlwasserkreislauf des Motors zurückzukehren.

Im Falle der Verwendung des Wärmetauschers 1 in einer Heizölbrenneranlage dienen die Stutzen 7, 8 zur Zufuhr bzw. Abfuhr von Heizungswasser oder erwärmtem Brauchwasser.

In jedem Fall findet also im Gehäuse 2, das auch als Druckbehälter ausgebildet sein kann und im Falle der Verwendung in einem Kühlwasserkreislauf eines Dieselmotors als solcher ausgebildet sein muß, um dann einen Innendruck von wenigstens 10 bar auszuhalten, zwischen der in der Rohrschlange 3 strömenden kälteren, aufzuheizenden Flüssigkeit und der die Rohrschlange umspülenden, wärmeren Flüssigkeit ein intensiver Wärmeaustausch statt, der dadurch besonders gefördert wird, daß die Rohrschlange aus dem Stahl des Typs Ermeto besteht, der eine sehr gute Wärmeleitfähigkeit bei guter Verformbarkeit aufweist. Durchgeführte Versuche haben gezeigt, daß sich mit einer Ausführungsform des Wärmetauschers, die die in der Zeichnung dargestellten Abmessungen aufweist, eine Aufheizung des etwa mit Umgebungstemperatur eintretenden Dieselkraftstoffs auf 75° C und darüber erreichen läßt, wobei dann das im Gegenstrom oder Gleichstrom das Gehäuse durchströmende Kühlwasser des Motors eine Temperatur von etwa 90° C besitzt. Die Aufheizung des Dieselkraftstoffs auf 75° C bewirkt eine wesentlich effektivere Verbrennung des Kraftstoffs im Motor, so daß der Schadstoffanteil der Abgase erheblich gesenkt werden kann. So wurde beispielsweise der Kohlenstoffanteil des Abgases, der normalerweise bei 4 bis 8 % liegt, mit Hilfe der neuerungsgemäßen Vorrichtung unter vergleichbaren Bedingungen auf 0,7 % gesenkt und damit wesentlich unter den zukünftig einzuhaltenden Grenzwert von 2,5 %.

Es versteht sich, daß die oben beschriebene Vorrichtung nicht nur bei der Verbrennung von Dieselkraftstoff und leichtem Heizöl, sondern auch von schwerem Heizöl überraschende Vorteile bietet.

## Ansprüche

1. Vorrichtung zur Schadstoffminderung in den Abgasen von Dieselmotorfahrzeugen, **gekennzeichnet** durch einen Wärmetauscher (1), der in den Kühlwasserkreislauf des Dieselmotors zwischen Motor und Kühler einschaltbar ist und in dem sich eine Rohrschlange (3) befindet, deren Eingangsstutzen (4) zum Wärmetauscher (1) an den Kraftstofftank und deren Ausgangsstutzen (5) aus dem Wärmetauscher (1) an die Kraftstoffzuflußleitung des Motors anschließbar sind und die aus dem legierten Stahl des Typs Ermeto besteht und in dem Gehäuse (2) des Wärmetauschers (1) spiralförmig verlaufend und sich über den gesamten Gehäusequerschnitt erstreckend angeordnet ist.

2. Vorrichtung zur Schadstoffminderung in den Abgasen von Heizölbrenneranlagen von Gebäudeheizungen, **gekennzeichnet** durch einen Wärmetauscher (1), der in den Heizwasservorlauf oder in die Warmwasserentnahmeleitung einschaltbar ist und in dem sich eine Rohrschlange (3) befindet, deren Eingangsstutzen (4) zum Wärmetauscher an die Heizölabgabeleitung des Heizöltanks und deren Ausgangsstutzen (5) aus dem Wärmetauscher an die Heizölzuflußleitung zum Brenner anschließbar sind und die aus dem legierten Stahl des Typs Ermeto besteht und in dem Gehäuse (2) des Wärmetauschers (1) spiralförmig verlaufend und sich über den gesamten Gehäusequerschnitt erstreckend angeordnet ist.

3. Vorrichtung nach Anspruch 1 oder 2, dadurch **gekennzeichnet,** daß das Gehäuse (2) des Wärmetauschers (1) zylindrisch ist, und daß der Eingangsstutzen (4) und der Ausgangsstutzen (5) sich an den Stirnseiten (9, 10) des Zylinders befinden, in die auch die Kühl- bzw. Heizwassereingangs- und Ausgangsstutzen (7 bzw. 8) münden.

4. Vorrichtung nach Anspruch 3, dadurch **gekennzeichnet,** daß das Gehäuse (2) als Druckbehälter ausgebildet ist, der einem Innendruck von wenigstens 10 bar widersteht.

5. Vorrichtung nach Anspruch 3 oder 4, dadurch **gekennzeichnet,** daß die Kühl- bzw. Heizwassereingangs- und Ausgangsstutzen (7 bzw. 8) mit den Eingangs- bzw. Ausgangsstutzen (4 bzw. 5) für den Dieselkraftstoff bzw. das Heizöl auf ein und demselben Durchmesser des zylindrischen Gehäusequerschnitts liegen.

Fig.1

Fig.2

EP 0 364 651 A1

Europäisches
Patentamt

EUROPÄISCHER RECHERCHENBERICHT

Nummer der Anmeldung

EP 89 10 2163
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | FR-A-2505405 (VAUDIN) <br> * Seite 1, Zeilen 13 - 30 * <br> * Seite 2, Zeilen 48 - 58 * <br> --- | 1, 3, 5 | F02M31/16 <br> F23K5/00 |
| Y | FR-A-2503264 (GENOUVRIER) <br> * Seite 1, Zeilen 1 - 3 * <br> * Seite 1, Zeilen 12 - 29 * <br> * Seite 2, Zeilen 1 - 9 * <br> * Seite 2, Zeilen 17 - 31 * <br> --- | 1, 2, 3, 5 | |
| Y | DE-U-8506153 (GRUBEL) <br> * Seite 2, Zeile 29 - Seite 4, Zeile 4; Figur 1 * <br> --- | 2 | |
| A | US-A-3989019 (BRANDT) <br> * Spalte 1, Zeilen 5 - 13; Figur 2 * <br> * Spalte 1, Zeilen 29 - 48 * <br> * Spalte 2, Zeilen 16 - 42 * <br> * Spalte 2, Zeile 66 - Spalte 3, Zeile 59 * <br> --- | 1, 3, 4 | |
| A | FR-A-2451469 (HAGEAUX) <br> * Seite 1, Zeilen 1 - 19 * <br> * Seite 2, Zeilen 1 - 14 * <br> --- | 1, 3 | RECHERCHIERTE SACHGEBIETE (Int. Cl.5 ) <br><br> F02M <br> F23K |
| A | US-A-2320821 (JIMENEZ) <br> * Seite 2 *Linke Spalte Zeile 35 - Rechte Spalte Zeile 36 ;Figuren 2, 3 <br> * Seite 2 * Rechte Spalte Zeile 70 - Seite 3, Linke Spalte Zeile 2 <br> --- | 2, 3, 4, 5 | |
| A | US-A-4326492 (LEIBRAND) <br> * Spalte 5, Zeilen 17 - 36 * <br> --- | 1 | |
| A | DE-A-3539721 (HENDLMEIER) <br> * Spalte 4, Zeilen 5 - 38 * <br> --- | 1, 3, 4, 5 | |

-/--

Der vorliegende Recherchenbericht wurde für alle Patentansprüche erstellt

| Recherchenort | Abschlußdatum der Recherche | Prüfer |
|---|---|---|
| DEN HAAG | 21 SEPTEMBER 1989 | JORIS J.C. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8806619 (MULLER)<br>* Seite 4, Zeilen 1 - 6 *<br>* Seite 6, Zeilen 21 - 28 *<br>* Seite 7, Zeilen 1 - 7 *<br>* Seite 9, Zeilen 27 - 32 *<br>* Seite 10, Zeilen 16 - 19 *<br>* Seite 10, Zeilen 29 - 32 *<br>* Seite 11, Zeilen 1 - 3 *<br>----- | 1, 2, 3 | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 21 SEPTEMBER 1989 | JORIS J.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P0403)